# EUROPEAN PATENT APPLICATION

(11) **EP 4 446 071 A1**
(43) Date of publication of application: **16.10.2024**
(21) Application number: 23168040.6
(22) Date of filing: 14.04.2023
(51) Int. Cl.: B25J 15/06, B65G 47/91

(54) **SUCTION GRIPPER FOR GRIPPING AN OBJECT HAVING A CORRUGATED SURFACE**

(71) Applicant: Piab Aktiebolag, 182 12 Danderyd (SE)
(72) Inventor: WIGREN, Gustaf, 185 34 VAXHOLM (SE); MILLBERG, Mikael, 182 12 DANDERYD (SE)
(74) Representative: Brann AB

(57) **Abstract**

A suction gripper **10** configured to grip an object having a corrugated surface **100** is disclosed, which suction gripper exhibits a pair of shorter sealing strips **70,** each of which sealing strips comprises a multitude of bristles **80,** connecting two longer essentially parallel sealing strips **60.**

## Description

### FIELD OF THE INVENTION

The present invention relates to suction grippers, and more particularly to a suction gripper for gripping an object having a corrugated surface, such as a corrugated plate, which suction gripper exhibits a pair of sealing strips, each of which comprises a multitude of bristles, connecting two essentially parallel sealing strips.

### BACKGROUND ART

Suction grippers are known in the art and are used for gripping various objects, such as in automation of lifting operations.

Corrugated plates are used in various areas, e.g. in corrugated fin plate heat exchangers. Corrugations can have different forms, such e.g. trapezoidal and sinusoidal, respectively. Corrugations are typically alternate parallel ridges and grooves. The fins of a corrugated fin plate for a heat exchanger may be densely packed. When attempting to grip such plate with a conventional suction gripper, such as a suction cup or suction pad, the suction area of the suction gripper may cover a multitude of fins, and hence also a multitude of channels in the plate. When gripping with a suction gripper over one or more channels in a corrugated plate, in order to create a sufficient lifting power in the suction gripper, the flow of ambient fluid, typically air, into the suction gripper via the channels covered must be compensated for by a higher vacuum flow.

It would be desirable to be able to reduce the vacuum flow needed for lifting a corrugated plate.

It is an object of the present invention to provide a suction gripper allowing for a reduced vacuum flow when lifting a corrugated plate.

### SUMMARY OF THE INVENTION

The above object has been solved by a suction gripper exhibiting a multitude of bristles connecting two essentially parallel sealing strips. By appropriately aligning the inventive gripper over a corrugated plate the multitude of bristles will seal the suction area of the gripper in a transverse direction of longitudinal ridges in the corrugated plate.

According to the present invention, the above object has been accomplished by a suction gripper **10** configured to engage with a corrugated surface of an object **100** comprising: a gripper body **20;** a suction chamber **30** having an opening **40** configured to be fluidly connected to vacuum, a suction area **50** arranged in a lower portion of the suction chamber **30** configured to engage with a corrugated surface of an object **100,** said suction area **50** comprising: a pair **60** of essentially parallel longer sealing strips **60a; 60b** having a first end **60a1; GOb1** and a second end **60a2; 60b2,** respectively; and a first pair **70** of essentially parallel shorter sealing strips **70a; 70b,** one **70a** of which shorter sealing strips connects the first ends **60a1; 60b1** of the first pair **60** of essentially parallel longer sealing strips, and the other **70b** of which connects the second ends **60a2; 60b2** of the pair **60** of essentially parallel longer sealing strips, wherein each one of the shorter sealing strips **70a; 70b** is formed of a multitude of bristles **80** generally orientated so as to exhibit, in a relaxed state of the bristles, an extension in a direction outwardly essentially parallel to the longer sealing strips **60a; 60b,** and wherein a multitude of the bristles **80** extend below a plane of the suction area **50** containing the longer sealing strips **60a; 60b.**

In preferred embodiments, doubly arranged shorter sealing strips are provided. The bristles of two adjacent strips are preferably orientated in different directions, i.e. so that, in respect to a plane of suction area containing the essentially parallel longer sealing strips, the inclination of the bristles of one of the two adjacent strips is different from the bristles of the other.

Further embodiments and advantages of the invention will be apparent from the following detailed description and appended claims.

The term "corrugated plate" as used herein is intended to refer to a plate having continuous essentially parallel ridges, which ridges are connected by grooves. The geometrical shape of the longitudinal ridges can vary, and may for example be sinusoidal, trapezoidal, rectangular etc. In the art, the ridges may sometimes also be referred to as fins. Two neighboring ridges are connected by a groove. In the art, the grooves may also be referred to as valleys.

### BRIEF DESCRIPTION OF THE ATTACHED DRAWINGS

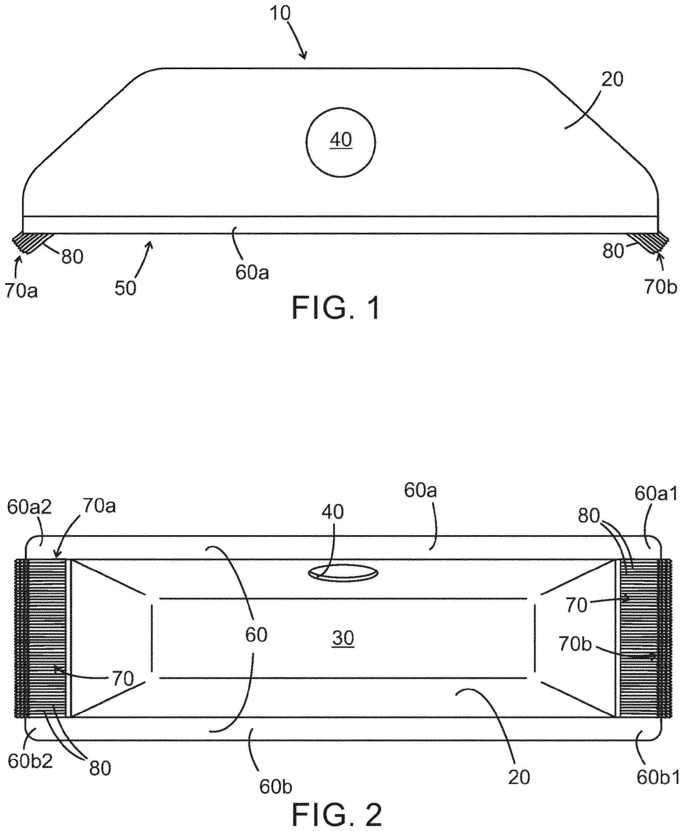

Figure 1 shows a side view of an embodiment of a gripper **10** according to the invention.
Figure 2 shows a view from below of the gripper **10** of **Fig. 1****.**
Figure 3 shows an end view of the gripper **10** engaged with a corrugated plate **100,** showing a multitude of bristles **80** reaching into grooves **100b** of corrugations of the corrugated plate located between the essentially parallel longitudinal sealing strips **60.** In **Fig. 3****,** a vacuum generator **90** is connected to the opening **40.** A vacuum generator **90,** or, alternatively, another source of vacuum, has intentionally been omitted in **Figs. 1** and **2** for improved visibility of gripper body **20.**
Figure 4 shows a perspective view of the gripper and corrugated plate in **Fig. 3****.**

In the figures, a connection for supplying pressurized air to the vacuum generator has deliberately been left out, as has also means for attachment of the gripper, e.g. to a robotic arm or the like.

### DETAILED DESCRIPTION OF THE INVENTION

Between two neighbouring ridges of a corrugated surface of an object, such as a corrugated plate, a groove is formed connecting the neighbouring ridges. When a suction gripper is used for gripping a corrugated surface of an object, the gripper may cover one or more such grooves. When actuated in such position, ambient fluid, typically air, will flow into the suction gripper through the grooves covered by the suction gripper. The present inventor has found that, when orientated appropriately, i.e. when aligning two parallel sealing strips of a suction gripper essentially in parallel corrugations of a corrugated surface, ordinary sealing strips will be effective to seal against the ridges, grooves, or a combination thereof, while in the transverse direction, a multitude of bristles arranged in each end of the gripper can be used to seal against ridges and grooves. The bristles of a given multitude of bristles are preferably arranged like in a paint brush, i.e. in close proximity to each other. The bristles should be long enough to reach down into the ridges covered by the suction gripper. Accordingly, in a relaxed state of the bristles, a multitude of the bristles of each shorter sealing strip should extend below the plane containing the longer sealing strips. The bristles should be arranged such as to have a general direction which is less than normal to the plane of the corrugated plate, i.e. the bristles should be inclined outwardly, in a direction essentially in parallel with the direction of the longer sealing strips.

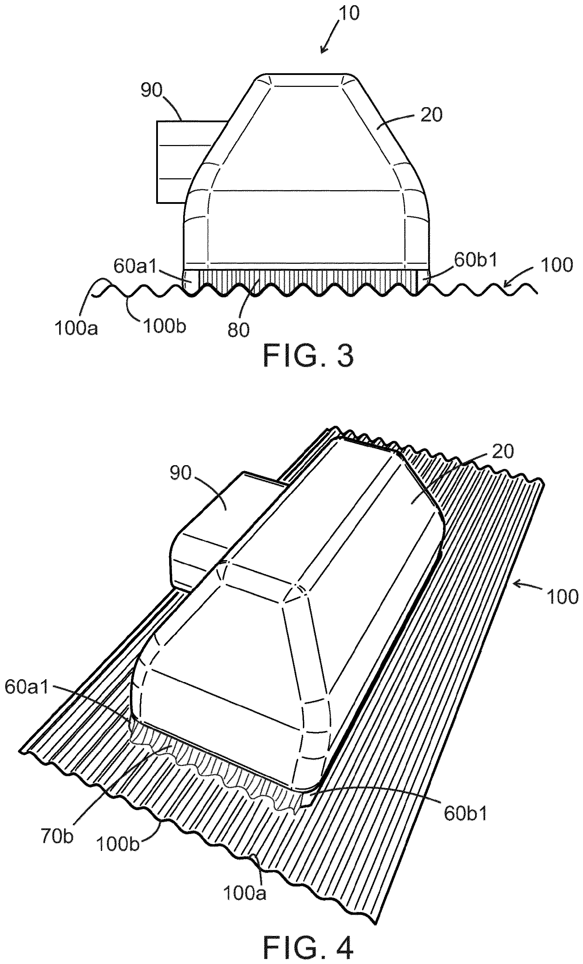

When the inventive gripper **10** is used and is appropriately aligned essentially in parallel with the corrugations as described above, the longer sealing strips **60a; 60b** will seal against ridges **100a,** grooves **100b,** or a combination thereof **100a;100b,** and the bristles **80** will reach down into the grooves and onto the ridges, such as illustrated in **Fig. 4****.** When air is being evacuated from the gripper in this position the bristles will be brought more closely together thereby effectively sealing in the transverse direction of the gripper.

The essentially parallel longer sealing strips **60a; 60b** are preferably made of a polymeric material, such as plastic or rubber, or an elastomer. The essentially parallel longer sealing strips should preferably be compressible for an enhanced contact with the underlying ridges, underlying grooves, or a combination thereof, and hence an improved sealing against the corrugated surface. The geometrical shape of a sealing surface of the essentially parallel longer sealing strips is not critical, and can be rounded such as arctuate, or semicircular, or flat.

The first pair of shorter sealing strips **70** can be complemented with additional sealing strips (not shown). For example, in a preferred embodiment the inventive gripper exhibits two pairs **70; 70'** of shorter sealing strips, one shorter sealing strip of each pair being arranged at each side of the longer sealing strips.

The thickness of the bristles is not critical, but will typically be within a range of 0.05-5 mm, more typically 0.1-1 mm, 0.1-0.3 mm, such as 0.15-0.25 mm. Generally, the wider the grooves, the thicker the bristles that can be used. For example, for a corrugated plate having grooves which are 2-4 cm wide and a similar depth, such as for roofing purposes, the bristles could be up to about 5 mm thick.

The bristles can be made from natural animal hair, such as from horse or boar, or can be synthetic, such as made from a polymeric material, such as a plastic material, e.g. nylon, polypropylene, polyurethane, such as polyether urethane.

For an improved versatility of the gripper the bristles of different pairs may have different lengths. Also, for same reason, different pairs (not shown) of shorter sealing strips may be arranged in the gripper body so that the bristles of one pair of sealing strips have a different inclination against a plane containing the longer sealing strips.

In a preferred embodiment the inventive gripper is provided with a vacuum generator **90** as the source of vacuum. The vacuum generator is preferably a conventional multi-stage ejector-type vacuum pump which is attached to the gripper body **20** and is fluidly connected to the opening **40.**

The measures of the suction area **50** of the inventive gripper **10** are not critical and can generally be adapted depending on the surface area and weight of an object to be gripped. Typically, the two shorter sides will generally have a length within the range of 20-500 mm, e.g. 20-80 mm, and the two longer sides will generally have a length within the range of 40-1,000 mm, e.g. 60-400 mm.

### LIST OF REFERENCE NUMERALS USED

- 10: suction gripper
- 20: gripper body
- 30: a suction chamber
- 40: opening
- 50: suction area
- 60: pair of essentially parallel longitudinal sealing strips
- 60a; 60b: individual sealing strips of the pair of essentially parallel longitudinal sealing strips
- 60a1; 60b1: first ends of individual sealing strips 60a and 60b
- 60a2; 60b2: second ends of individual sealing strips 60a and 60b
- 70: first pair of essentially parallel shorter lateral sealing strips
- 70a; 70b: individual sealing strips of the first pair of shorter lateral sealing strips
- 70': second pair of essentially parallel shorter lateral sealing strips
- 70a'; 70b': individual sealing strips of the second pair of shorter lateral sealing strips
- 80: bristles
- 90: vacuum generator
- 100: corrugated plate
- 100a: ridge of corrugated plate
- 100b: groove of corrugated plate

## Claims

1. A suction gripper (10) configured to engage with a corrugated surface of an object (100) comprising:
- a gripper body (20);
- a suction chamber (30) accommodated in the gripper body (20), said suction chamber (30) having an opening (40) configured to be fluidly connected to vacuum,
- a suction area (50) arranged in a lower portion of the suction chamber (30) configured to engage with a corrugated surface of an object (100), said suction area (50) comprising:
- a pair (60) of essentially parallel longer sealing strips (60a; 60b) having a first end (60a1; 60b1) and a second end (60a2; 60b2), respectively; and
- a first pair (70) of essentially parallel shorter sealing strips (70a; 70b),
one (70a) of which shorter sealing strips connects the first ends (60a1; 60b1) of the pair (60) of essentially parallel longer sealing strips, and the other (70b) of which connects the second ends (60a2; 60b2) of the pair (60) of essentially parallel longer sealing strips,
wherein each one of the shorter sealing strips (70a; 70b) is formed of a multitude of bristles (80) generally orientated so as to exhibit, in a relaxed state of the bristles, an extension in a direction outwardly essentially parallel to the longer sealing strips (60a; 60b),
and wherein a multitude of the bristles (80) extend below a plane of the suction area (50) containing the longer sealing strips (60a; 60b).

2. The suction gripper (10) of claim 1, comprising a second pair (70') of shorter sealing strips (70a'; 70b'), each one of which is arranged adjacent to the shorter sealing strips (70a; 70b) of the first pair (70) of shorter sealing strips, thereby forming doubly arranged shorter sealing strips (70a; 70a' and 70b; 70b').

3. The suction gripper (10) of claim 2, wherein the inclination towards the plane of the suction area (50) of the bristles (80) in a shorter sealing strip (70a; 70b) of the doubly arranged shorter sealing strips (70a, 70a'; 70b, 70b') is different from the inclination of the bristles (80) in the other shorter sealing strip (70a'; 70b') of the doubly arranged shorter sealing strips (70a, 70a'; 70b, 70b').

4. The suction gripper (10) of any one of the previous claims, wherein a vacuum generator (90) is mounted to the gripper body (20).
